# EUROPEAN PATENT APPLICATION

(11) **EP 4 632 254 A1**
(43) Date of publication of application: **15.10.2025**
(21) Application number: 23900982.2
(22) Date of filing: 27.11.2023
(51) Int. Cl.: F16K 17/18, F16K 31/122, F16K 31/524, F16K 31/53, F16K 31/04, A61H 9/00

(54) **HIGH-PERFORMANCE VALVE CONTROLLED BY NON-STANDARD GEARS**

(30) Priority: 08.12.2022 KR 20220170732
(71) Applicant: Lee, Chang Jae, Busan 46934 (KR)
(72) Inventor: Lee, Chang Jae, Busan 46934 (KR)
(74) Representative: Hautier IP - MC/EP
(86) International application number: PCT/KR2023/019229
(87) International publication number: WO 2024/122963

(57) **Abstract**

The present invention relates to: a high-performance valve controlled by non-standard gears, wherein the valve can control the supply and release of air so that several regions can be sequentially massaged by continuously massaging a region, in contact with one airbag, for several minutes while continuously supplying air from a cylinder to the airbag and releasing the air from the airbag for several minutes; a cylindrical air massager in which airflow is controlled by the high-performance valve controlled by non-standard gears; a massage bed that can increase the massage effect of the cylindrical air massager; and an integrated product in which the cylindrical air massager, in which airflow is controlled by the high-performance valve controlled by non-standard gears, is integrated with a commercial massage chair.

## Description

### [Technical Field]

The present invention relates to a high-performance valve for controlling air flow of a cylinder-type air massager, and more particularly, to a high-performance valve controlled by non-standard gears.

### [Background Art]

The high-performance valve disclosed in Patent Registration No. 0835755 invented first by the applicant of the present application and registered, the high-performance valve used in Patent Registration No. 1693238 and the high-performance valve used in Patent Registration No. 2248918 are configured such that a single-toothed gear having only one tooth and a standard gear having A plurality of teeth are engaged and rotated and rotate a disc cam, thereby sequentially opening and closing a piston valve. However, the standard gear alone cannot perform normal functions.

This is because the piston valve can ascend into a groove formed on a lower surface of the disc cam and is opened only when the disc cam for repeating rotation and stop is required to stop to allow the groove to stop at the accurate position vertically above the piston valve.

However, the technologies used in the previously registered three patents are incomplete because only the structure having the single-toothed gear and the standard gear engaged with each other may not cause the accurate stop position of the groove.

In addition, air massagers in the art have a function for automatically opening a valve to releases air when air pressure reaches the required pressure, and cylinder-type air massagers may enable a constant amount of air supplied from a cylinder. However, when air is prevented from being supplied to an airbag due to a bent air hose for delivering the air, or a belt is excessively tightly fastened to have insufficient space for inflation of the airbag inside the belt, a drive motor may be overloaded, and a pain may be generated in a massage portion subjected to excessive pressure.

### [Disclosure]

### [Technical Problem]

In order to solve the above problems, the present invention provides a high-performance valve in which a groove formed on a bottom of a disc cam always stops at an accurate position above a piston valve and top lands are prevented from colliding with each other when two teeth are engaged, provides a high-performance valve controlled by non-standard gears to prevent air pressure from rising beyond required pressure to prevent a drive motor from overloading and maintain a constant force pressurizing a massage area, provides a high-performance valve controlled by non-standard gears to automatically open a pressure reduction valve to release air when air pressure inside a cylinder is excessively higher, thereby achieving a high-quality massage effect, and provides a pressure reduction valve assembled at a bottom of a central cylinder, thereby achieving a high-quality massage effect through air flow of a cylinder-type air massager.

### [Technical Solution]

The non-standard gears for controlling the high-performance valve according to the present invention to achieve the above purposes may be preferably configured such that the number of teeth is half the number of a standard gear.

In addition, the non-standard gear for controlling the high-performance valve according to the present invention to achieve the above purposes may be preferably configured such that teeth are manufactured shorter than those of the standard gear to have a short engaged length between two gear teeth.

In addition, the high-performance valve controlled by non-standard gears to achieve the above purposes may be preferably configured such that two gears are assembled to have a distance between axles longer than a normal distance between axles subject to the formula, and an engaged length between teeth of the two gears is shorter than the standard design.

In addition, the high-performance valve controlled by non-standard gears to achieve the above purposes may be preferably configured such that an anti-collision spring (154) is assembled at a position in which a single-toothed first gear (59) is initially engaged with a second gear (52) during rotation so as to prevent a top land of a tooth of the second gear from stopping at the position.

In addition, it may be preferable that a pressure reduction valve (25) is assembled below the bottom of a cylinder so that, when air pressure inside the cylinder becomes excessively higher, the valve is opened to release the air.

### [Advantageous Effects]

As described above, according to the high-performance valve controlled by non-standard gears of the present invention, the groove provided on the bottom of a disc cam (71) for sequentially opening and closing a plurality of piston valves while repeating rotation and stop stops at an accurate vertically position above a piston valve (73) when the disc cam stops, so that the high-performance valve can be always operated normally.

In addition, a collision prevention spring (154) is assembled, so that top lands of first and second gears can be prevented from colliding with each other.

In addition, a pressure reduction valve (25) is installed on the bottom of a central cylinder (20) to open the valve to release air when air pressure inside the cylinder is excessively higher, so that a drive motor can be prevented from overloading, and excessively strong pressure during massaging can be prevented.

### [Description of Drawings]

FIG. 1 is a view for explaining the principle of a high-performance valve.
FIG. 2A is a front view of the assembly of a disc cam, a piston valve, and a cylinder block.
FIG. 2B is view showing the disc cam of the high-performance valve.
FIG. 3 is view showing the piston valve of the high-performance valve.
FIG. 4 is a view showing the cylinder block of the high-performance valve.
FIG. 5 shows the name of each part of a gear.
FIG. 6 is a view showing a state in which a first gear having one tooth and a second gear having half the number of teeth of a standard gear are engaged and normally rotated.
FIG. 7 is an assembly front view of a cylinder-type air massager using a high-performance valve controlled by non-standard gears and having a pressure reduction valve assembled to the bottom of a cylinder.
FIG. 8 is a view showing of a first cam that lowers a central piston.
FIG. 9 is a view showing a second cam that raises a second press bar.
FIG. 10 is a view showing a bed for upper body massage.
FIG .11 shows the name of each function of a massage chair.
FIG. 12 is a view showing a product formed by combining a massage chair and a cylinder-type air massager using the high-performance valve controlled by non-standard gears.
FIG. 13 is a view showing assembled non-standard gears having teeth manufactured shorter than a standard gear.
FIG. 14 is an assembly view in which a distance between axles of two gears is designed to be longer than the standard design formula, so that an engaged length of teeth of the two gears is shorter than the standard design.
FIG. 15 a view showing a state in which a first gear having one tooth is rotated and a top land the tooth of the first gear collides with a top land of a tooth of a second gear.
FIG. 16 is a view showing that a spring is assembled at a position in which the tooth of the rotating first gear comes into initial contact with the second gear so as to prevent the top land of the tooth of the second gear from stopping at the position.

### [Best Mode]

### [Mode for Invention]

The present invention will be described in detail with reference to the accompanying drawings as follows.

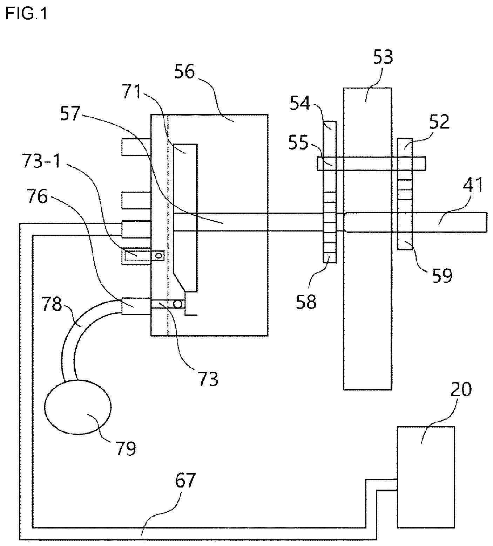

FIG. 1 is a view for explaining the principle of controlling a high-performance valve while interlocking with four gears for controlling the high-performance valve.

Specifically, when the four gears including a first gear 59, a second gear 52, a third gear 54 and a fourth gear 58 are interlocked, a disc cam 71 is repeatedly rotated and stopped to sequentially open and close a piston valve 73.

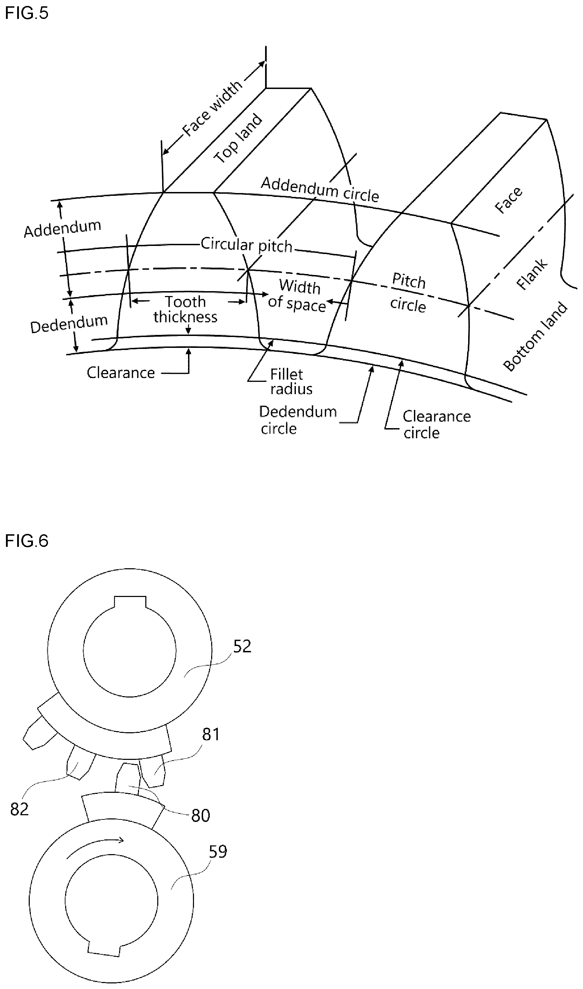

Specifically;
the first gear 59 assembled on an output shaft 41 of a reduction motor is rotated to rotate the second gear 52. The first gear 59 is a single-toothed gear having only one tooth. Thus, the first gear 59 is rotated 360° one time to rotate the second gear 52 having A plurality of teeth by a central angle corresponding to one tooth of the second gear. Thereafter, when the first gear 59 continues to be rotated, the teeth of the first gear is disengaged from the teeth of the second gear (see FIG. 6), and accordingly, the second gear 52 is stopped and only the first gear 59 continues to be rotated and re-engaged with the second gear, partially rotates the second gear, and then rotates the second gear while repeating the disengaged and re-engaged operation.

For example, assuming that the second gear has 12 teeth, the second gear 52 is rotated 360° one time when the first gear is rotated 12 times.

When the second gear 52 is rotated 360° one time, the third gear 54 assembled on the same shaft 55 as the second gear is also rotated 360° one time and rotates the fourth gear 58. The third gear 54 is also a single-toothed gear having only one tooth, and accordingly, rotates the fourth gear 58 by a central angle corresponding to one tooth of the fourth gear.

When the fourth gear is rotated, the disc cam 71 assembled on the same shaft 57 as the fourth gear 58 is rotated to open and close the valve.

Accordingly, the valve is opened and closed when the first gear is rotated by the same number of teeth of the second gear.

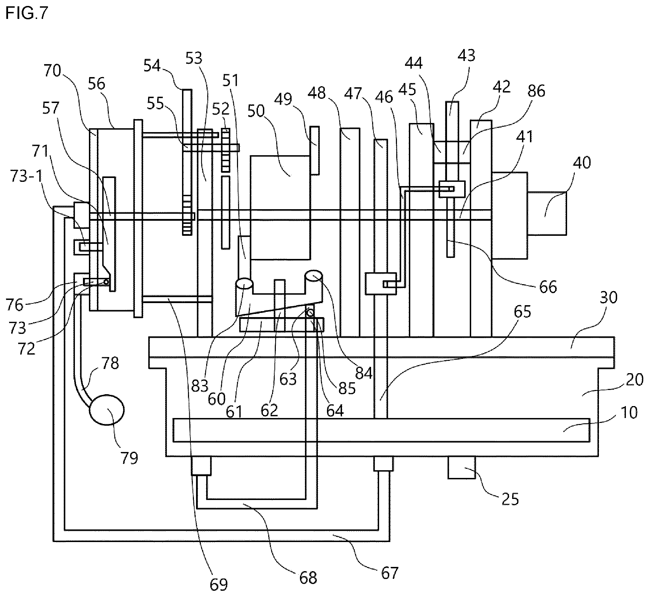

When the valve is opened, air introduced from a central cylinder 20 to the high-performance valve through a cylinder and a high-performance valve hose 67 is supplied into an airbag 79 connected to the opened valve and an airbag hose 78 to generate expansion force in the airbag, and accordingly, the air is transferred to a massage area by using a belt or a massage bed to pressurize the massage area, and then discharged through an intake and exhaust piston valve 63 of FIG. 7.

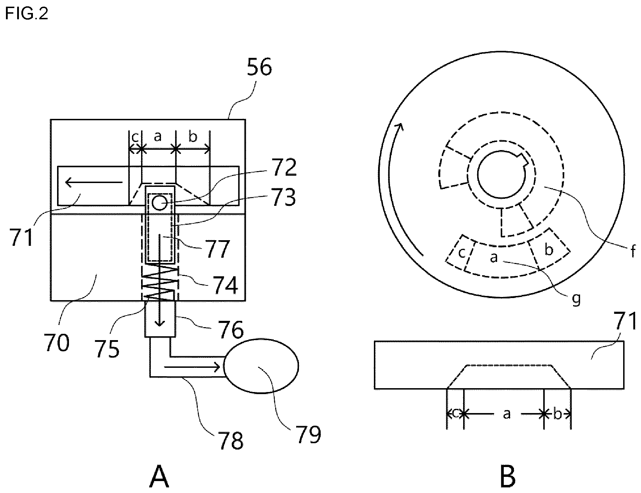

In FIG. 2-A, the piston valve 73 is assembled to a cylinder block 70 of the high-performance valve. When the disc cam 71 horizontally assembled on the piston valve is rotated in a direction of the arrow, a vent hole 72 of the piston valve ascends above a cylinder hole 74 due to elasticity of a spring 75 while the piston valve 73 is rubbing against a slope c section having a height gradually increased. When the piston valve meets a groove a section, the disc cam is stopped, and when the piston valve is raised into the groove a, the vent hole 72 of the piston valve is raised above the cylinder hole 74 and opened.

The air compressed from the central cylinder 20 passes through the vent hole 72 of the opened piston valve and a vertically elongated hole 77 of the piston valve and is supplied into the air bag 79 through the hose 78.

Once the vent hole 72 is raised above the cylinder hole 74 and opened, the vent hole remains opened until the output shaft 41 is rotated by the same number of times as the number of teeth of the second gear 52 to rotate the disc cam again. Accordingly, the air compressed from the central cylinder 20 is supplied and discharged into the air bag 79, which is connected to the opened piston valve 73 and the hose 78,by the same number of times as the number of teeth of the second gear, thereby continuously massaging an area coming into contact with the airbag 79 by the same number of times as the number of teeth of the second gear. Thereafter, when the disc cam is rotated again, a slope b section having a height gradually decreased rubs against the piston valve 73 and the vent hole 72 of the piston valve 73 ascends into the cylinder hole 74, thereby blocking air flow.

When the disc cam continues to be rotated and the groove a section of the disc cam stops above the piston valve assembled in the next cylinder hole 74, the piston valve assembled below the groove a section is raised into the groove a and opened, and the air supplied from the central cylinder 20 is supplied and discharged into the air bag connected to the newly opened piston valve and the hose, thereby continuously massaging the area coming into contact with the air bag.

FIG. 2-B is a view showing a shape of the disc cam in which the slope c and b sections and the groove a section are indicated at the bottom.

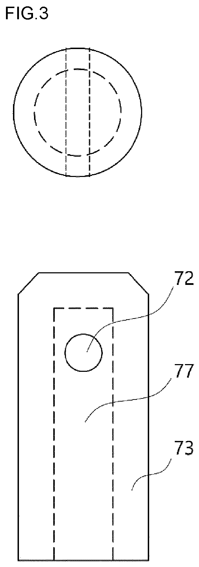

FIG. 3 shows the piston valve 73 assembled to the cylinder hole 74 of the high-performance valve, so as to be opened and closed while moving up and down according to the heights of the groove provided on a lower surface of the disc cam 71 rotated horizontally above the cylinder block 70.

When the vent hole is raised above the cylinder hole 74 and opened, the air compressed and sent from the cylinder 20 is supplied into the air bag after passing through the vent hole 72 and the vertical hole 77.

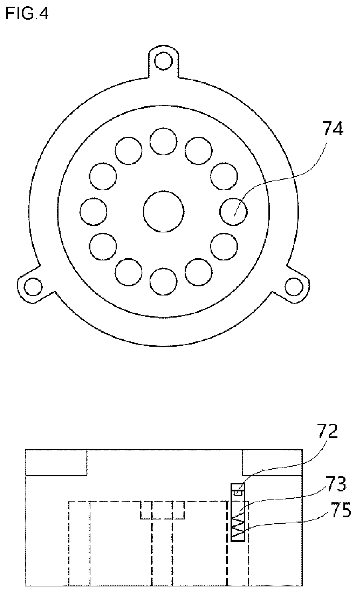

FIG. 4 is a view showing the cylinder block of the high-performance valve.

A plurality of cylinder holes 74 are machined in the cylinder block, and piston valves 73 are assembled into the cylinder holes, respectively.

FIG. 5 shows the name of each part of the gear, and a surface at an end of a teeth is called a top land.

FIG. 6 shows a normal operating form in which, when the single-toothed first gear 59 assembled on the output shaft 41 of the reducer is rotated in the direction of the arrow, a tooth 80 of the first gear enters a space between teeth 81 and 82 of the second gear to rotate the second gear 52.

However, when the second gear 52 is a standard gear, the single-toothed first gear is rotated 360° one time to rotate the second gear by a central angle corresponding to two teeth of the second gear.

For example, it is assumed that the second gear is a standard gear with 24 teeth, and the teeth of the second gear are numbered from 1 to 24. When the first gear 59 is rotated initially, the first gear rotates the second gear while being inserted between the tooth no. 1 and the tooth no. 2 of the second gear 52. Thereafter, when the first gear continues to be rotated, the tooth of the first gear and the teeth of the second gear are disengaged from each other and the second gear is stopped. When the first gear is rotated 360° one time and then engaged with the second gear again, the first gear is not inserted between the teeth No. 2 and No. 3, but inserted between the teeth No. 3 and No. 4, and then, inserted between the teeth No. 5 and No. 6.

The tooth of the first gear is engaged with the tooth No. 1, then with the tooth No. 3, then with the tooth No. 5, and then with the tooth No. 7 of the second gear.

In addition, the stop positions of the second gear are different between when the tooth of the first gear rotates the second gear while being engaged with the tooth No. 1 of the second gear and when the tooth of the first gear rotates the second gear while being engaged with the tooth No. 2 of the second gear.

When the stop position of the second gear for determining a stop position of the groove of the disc cam is not accurate, the groove a section of the disc cam fails to stop at the accurate position vertically above the piston valve, and accordingly, the piston valve 73 cannot be raised to the groove a section and therefore cannot be opened. Accordingly, the stop position of the second gear 52 is always constant when the non-standard gear having half the number of teeth of the standard gear is used by leaving only the teeth of the second gear engaged with the teeth of the first gear, such as Nos. 1, 3, 5, 7, 9, 11, and the like and cutting off non-engaged teeth such as Nos. 2, 4, 6 and the like, and accordingly, the groove a section of the disc cam is always stopped vertically above the piston valve, so that the high-performance valve can be operated normally.

FIG. 7 shows the overall configuration of the cylinder-type air massager using the high-performance valve controlled by the non-standard gears. **In** a structure in which a base block 30 is assembled on top of a central cylinder 20 assembled thereon with a central piston 10, a main block 42 and a first auxiliary block 45 and a second auxiliary block 48 supporting an output shaft 41 are assembled on an upper right side of the base block, and a third auxiliary block 53 assembled thereto with a gear shaft 57 and a high-performance valve 56 is assembled; and in a structure in which a reduction motor 40 is assembled to the main block 42, and a first cam 47, a second cam 66, and a cylindrical finger 50 are assembled to the output shaft 41 of the reduction motor, the output shaft 41 is rotated when power is applied to the reduction motor.

When the output shaft is rotated to rotate the first cam 47 and a first press bar 65 is lowered, a second press bar 66 connected to the first press bar via a link 46 is simultaneously lowered together with the central piston 10 coming into contact with a bottom of the first press bar 65.

When the central piston descends, air in the central cylinder 20 is compressed and sent to a high-performance valve 56 through a hose 67, and then supplied into the only one opened piston valve 73 among a plurality of cylinder holes 74 provided in the high-performance valve and an air bag 79 connected to the hose 78, thereby generating expansion force inside the airbag 79.

After the generated expansion force of the airbag is transmitted to a massage area using an auxiliary tool such as a belt or massage bed to pressurize the massage area, the air is discharged by opening an intake and exhaust piston valve 63, and then the second cam 66 is rotated to raise the second press bar 43, thereby simultaneously raising the first press bar 65 connected to the second press bar 43 via the link 46 and the central piston 10 connected to the bottom of the first press bar via a pin. Meanwhile, the intake and exhaust piston valve 63 is opened and closed by rotating an intake and exhaust valve disc cam 60 left and right alternately due to rotation of the cylindrical finger 50.

Specifically, when fingers 49 and 51 of the cylindrical finger 50 assembled on the output shaft 41 are rotated to alternately rotate a left step 83 and a right step 84 of an intake and exhaust valve disc cam shaft 62, the intake and exhaust piston valve 63 is opened and closed.

First, when the second finger 51 of the cylindrical finger pushes the left step 83 around the intake and exhaust valve disc cam shaft 62, the intake and exhaust valve disc cam 60 is rotated to the left around the intake and exhaust valve disc cam shaft 62, and when the first finger 49 pushes the right step 84 of the intake and exhaust valve disc cam shaft 62, the intake and exhaust valve disc cam 60 is rotated to the right.

**In** this process, when the thicker side of the lower surface of the intake and exhaust valve disc cam 60 is stopped above the intake and exhaust piston valve 63, a vent hole 64 of the intake and exhaust piston valve ascends into a cylinder hole 85 of an intake and exhaust cylinder block 61 and the vent hole 64 of the intake and exhaust piston valve 63 is blocked, thereby closing the valve. Conversely, when the thinner side of the intake and exhaust valve disc cam 60 is stopped above the intake and exhaust piston valve 63, the vent hole 64 of the intake and exhaust piston valve is raised above the cylinder hole 85 of the intake and exhaust cylinder block and opened due to elasticity of the spring assembled at the bottom of the intake and exhaust piston valve.

Because force for raising the central piston is largely applied due to the air pressure inside the air bag when the central piston 10 is stopped at a bottom dead center, the central piston 10 generates noise while bouncing up as soon as the first cam pressed by the first cam 47 has a shorter radius to remove the pressing force, and accordingly, the intake and exhaust valve is opened just before the central piston ascends to release the compressed air and then the second cam 66 is rotated to raise the second press bar 43, thereby simultaneously raising the first press bar 65 connected to the second press bar via the link 46 and the central piston 10 connected to the bottom of the first press bar via the pin.

After the air is sucked into the cylinder through the intake and exhaust valve opened while the central piston is ascending, and after the intake and exhaust valve is closed just before the central piston descends again, the central piston 10 is lowered due to the rotation of the first cam 47, and accordingly, the air inside the cylinder continuously performs the massage while being repeatedly supplied into the airbag through the high-performance valve 56.

However, when, during using the massager, the hose for supplying the air into the air bag is bent to cause the air to be insufficiently supplied into the air bag, or the belt is filled too tightly to cause an insufficient space for allowing the airbag inside the belt to inflate, the drive motor 40 may overload, thereby causing a malfunction. Thus, a pressure reduction valve 25 may be installed at the bottom of the cylinder to automatically open the valve to release the air when the air pressure inside the cylinder is raised beyond the required pressure, so that the overload can be prevented.

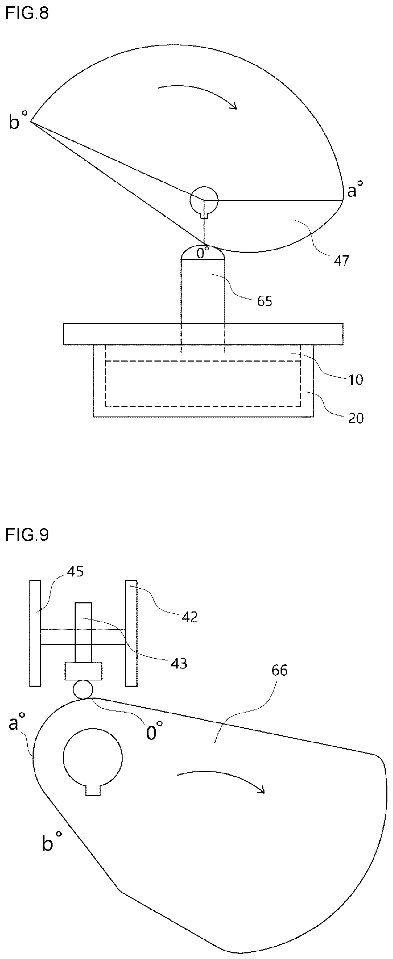

FIG. 8 is a view showing the first cam 47 that presses and lowers the first press bar 65 by a first eccentric cam.

After being assembled on the output shaft and when the part 0° having the shortest radius during rotation in the direction of the arrow rubs against the first press bar 65, the first press bar 65 and the central piston 10 are positioned at top dead centers. When the part a° having a gradually longer radius rubs, the central piston 10 descend to compress and send the air in the central cylinder 20 to the high-performance valve 56 through the hose 67, and accordingly, the expansion force generated by supplying the air into the only one opened cylinder hole 74 among the cylinder holes provided in the high-performance valve and the air bag 78 connected to the hose 77 is transmitted to the massage area using an auxiliary tool, such as a belt or massage bed, thereby pressurizing the massage area.

Since the expansion force becomes stronger when more air is supplied to the airbag, the force pressurizing the massage area also becomes from light pressure to strong pressure.

When the center angle a° part of the cam having the longest radius of the eccentric cam rubs against the press bar 65, the central piston is lowered to the bottom dead center, and pressurizes, by the strong pressure, the area coming into contact with the airbag while the entire amount of air in the central cylinder 20 is supplied to the airbag. Then, since the eccentric cam is rotated and the central piston 10 is stopped at the bottom dead center until the central angle b° part rubs against the first press bar 65, the air supplied to the airbag keeps the strong pressure in a stopped state. Since the radius of the eccentric cam is rapidly shortened in the part from b° to 0°, the eccentric cam is rotated without touching the first press bar 65.

FIG. 9 shows a second eccentric cam. After the central angle b° part of the first eccentric cam of FIG. 8 rubs against the first press bar 65 and while the part of the first eccentric cam having the radius rapidly shortened is rotated without touching the first press bar, the central angle b° part of the second cam 66 rubs against the second press bar and then repeats operations in which the part of the eccentric cam having the radius gradually increased rubs the second press bar 43 to raise the second press bar, so that the first press bar connected to the second press bar via the link 46 and the central piston 10 connected to the bottom of the first press bar via the pin are raised to the top dead centers and then the first press bar and the central piston are lowered again by the first cam, thereby continuously performing the massage.

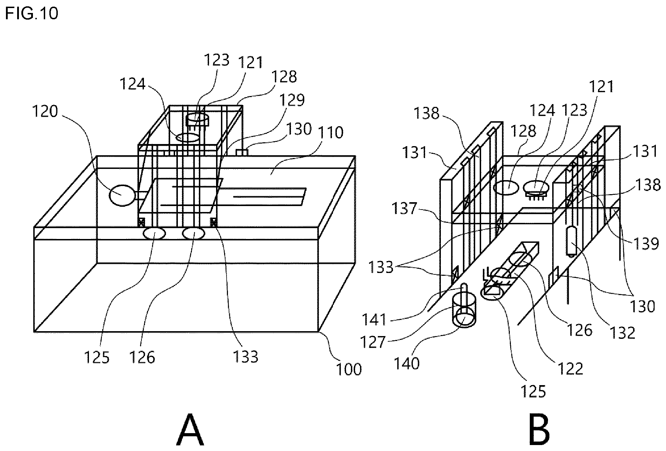

FIG. 10 shows a massage bed configured to have a bed base 110 for allowing a subject 120 to lie on a basic frame 100 of a bed. When the subject lies down, walls 131 are erected at both sides of the subject's upper body. One wall is fixed to the bed frame 100 using a hinge 133, and the other wall is configured to be fixed using a lock 130 and lifted to one side after releasing the lock.

A massage upper table 128 having a lower surface, to which a Velcro tape 137 is attached, is inserted between the two walls 131 so as to be moved up and down. When the massage upper table is moved up and down, vertical elongated holes 138 formed in the both walls serve as guides for movements of bolts 139 coupled to both sides of the massage upper table. When the bolts 139 are tightened, the massage upper table is fastened and fixed to the walls. The bolts are loosened to move the massage upper table up and down.

When the airbag is placed on the bed base under the back of the subject lying on the bed base, the airbag is subject to strong pressure due to the subject's weight, so it may be difficult to supply air. Because the bed base is provided with a rectangular groove 122 and a plurality of round grooves 140 and airbags are inserted in the grooves in use to ensure spaces for the airbags to inflate, the back may be conveniently massaged without other components for adjusting distances between the airbags 125 and 126 and the massage area.

Acupressure pads 121 are attached to tops of the airbags 125 and 126 placed in the rectangular groove to simultaneously massage relatively wide areas, and an acupressure rod 141 is put on a top of the airbag 125 placed in the round groove 140 and used to apply acupressure to one acupoint.

Regarding a method in use, the subject lies down on the bed base 110, pulls a handle 132 to erect and fix the massage upper table 128 and the two walls supporting the massage upper table, adjusts a height of the massage upper table to allow expansion forces of the airbags attached to the massage upper table to be transmitted to a chest and abdomen portion, and then fixes the massage upper table by tightening the screws assembled to the both sides thereof, thereby massaging the abdomen portion. When the back portion is massaged, the airbags 125 and 126 are placed in the groove provided on the bed base, and the acupressure pads 121 are put on the tops of the airbags. Then, the subject lies thereon to massage the back. For getting up, the subject releases the lock 130, holds and lifts the handle 132 up, then raises the handle toward the hinge side so as to get up.

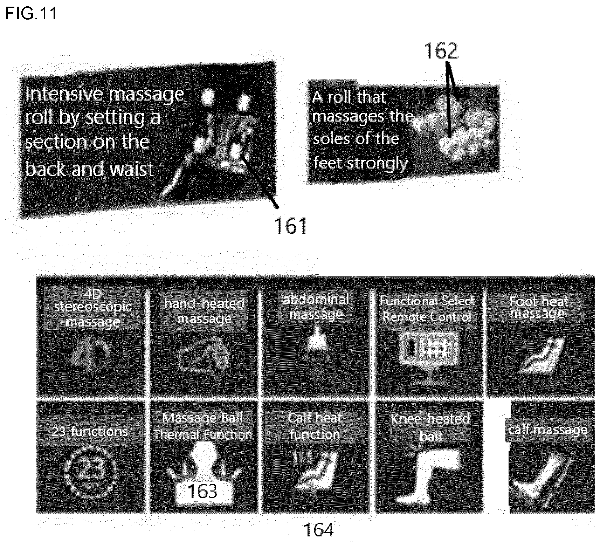

FIG. 11 shows massage functions of a commercially available massage chair, which representatively includes a rolling function 161 for focusing on massaging a desired area by setting up sections in the lower back area, a rolling function 162 for rubbing the soles strongly, a back tapping function using a vibrator and a heating function.

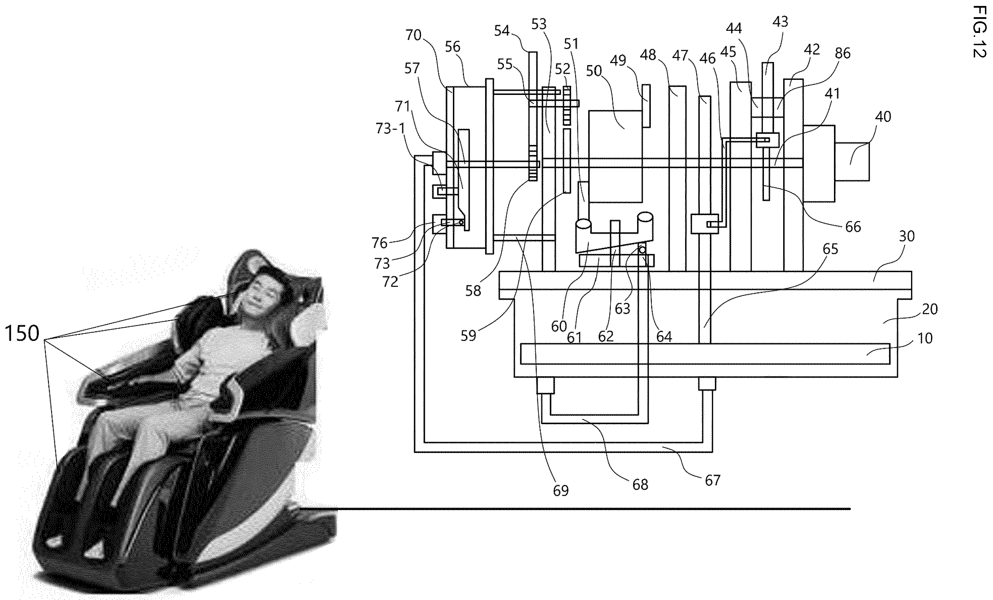

FIG. 12 is a draw showing a combination of a cylinder-type air massager using a high-performance valve controlled by non-standard gears and a commercially available massage chair.

The massage chair is well-known and has excellent design but has insignificant massage effects. Thus, the massage chair may be the best massager in all aspects when being used by removing the air massager used therein and assembling the cylinder-type air massager.

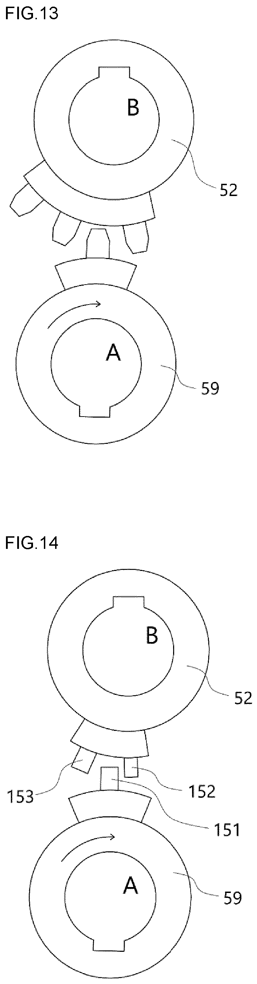

FIG. 13 is a view showing non-standard gears having teeth manufactured shorter than the standard gear.

The teeth are manufactured shorter to shorten the engaged length between the two gears than that of the standard gear, so that the second gear 52 may be rotated by a central angle corresponding to one tooth of the second gear when the first gear 59 having one tooth is rotated 360° one time.

When the non-standard gears having teeth manufactured shorter are used, the groove of the disc cam are always allowed to be stopped exactly vertically above the piston valve.

In FIG. 14, an inter-axis distance between the first gear 59 and the second gear 52 is designed to be longer than a distance subject to the inter-axis distance formula (p. c. d of gear A + p. c. d of gear B ÷ 2), the teeth of the two gears are designed to be engaged shorter than an assembled length subject to the standard design formula, and the second gear 52 is designed to be rotated by the central angle corresponding to one tooth of the second gear 52 whenever the first gear 59 is rotated 360° one time, so that the groove on the lower surface of the high-performance valve disc cam 71 may always be stopped vertically above the piston valve 73.

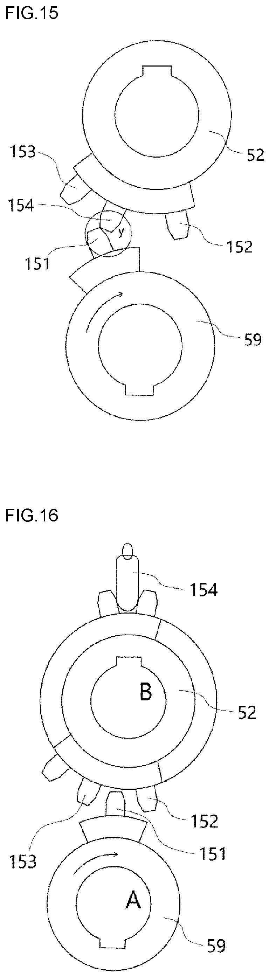

FIG. 15 is a view showing a state in which a top land of the first gear 59 having one tooth and a top land of the second gear 52 having a plurality of teeth collide with each other.

This shows a state in which, when the second gear 52 is partially rotated due to a cause other than the rotation of the first gear 59 during stopped operations of the massager, and the top land of the tooth of the second gear is stopped at the position in initial contact between the first gear and the tooth 154 of the second gear 52 while the tooth 151 of the first gear is rotated, the gears may break due to collision between the top lands.

In FIG. 16, when the first gear 59 is rotated, a spring 154 is assembled at a position in which the teeth 151 of the first gear initially comes into contact with the teeth of the second gear, and the spring 154 has a shape for easily pushing the second gear to prevent the top land of the teeth of the second gear from being stopped at that position, so that the top lands can be prevented from colliding with each other.

Because the initial contact position varies depending on the size and the number of teeth of the second gear, the exact position may not be specified.

## Claims

1. A high-performance valve controlled by non-standard gears, the high-performance valve comprising:
a first gear (59) having one tooth and assembled on an output shaft (41) of a reduction motor;
a second gear (52) rotated while being engaged with the first gear (59);
a third gear (54) having one tooth and assembled on a same shaft (55) of the second gear (52);
a fourth gear (58) rotated while being engaged with the third gear (54);
a disc cam (71) assembled on a same shaft (57) as the fourth gear (58) to repeat rotation and stop; and
a piston valve (73) raised to a groove a section of the disc cam (71) and opened when the disc cam (71) is stopped, wherein
the high-performance valve (56) is configured to control air flow of a cylinder-type air massager for pressurizing and massaging a body part by using airbag expansion force generated when air supplied from a central cylinder (20) passes through a vent hole (72) and is supplied into an airbag (79) after the piston valve (73) is opened, and the high-performance valve (56) uses a non-standard gear manufactured such that the second gear (22) has a plurality of teeth half a number of teeth of a standard gear to allow a groove a section of a high-performance valve disc cam (71) to be always stopped vertically above the piston valve, and wherein
the cylinder-type air massager includes:
a central cylinder (20) to which a central piston (10) is assembled;
a base block (30) assembled on a top of the central cylinder;
a main block (42) assembled on an upper right side of the base block;
a reduction motor (40) assembled to the main block;
a first auxiliary block (45) and a second auxiliary block (48) for supporting the output shaft (41) of the reduction motor (40); and
a third auxiliary block (53) to which the gear shaft (57) and the high-performance valve (56) are assembled, wherein
a first cam (47), a second cam (66), and a cylindrical finger (50) are assembled to the output shaft (41), the output shaft (41) is rotated to rotate the first cam (47) to lower a first press bar (65),
a second press bar (43) connected to the first press bar via a link (46) and the central piston (10) coming into contact with a bottom of the first press bar (65) descend to bottom dead centers,
the air in the central cylinder (20), upon the descent of the central piston (10), is compressed and sent to the high-performance valve (56) through a hose (67) and then supplied into only one opened piston valve (73) among a plurality of cylinder holes (74) provided in the high-performance valve and the air bag (79) connected to a hose (78), thereby generating expansion force in the air bag (79),
a belt for transmitting the expansion force of the airbag to a massage area and a massage bed are provided, and
further includes:
an intake and exhaust piston valve (63) opened just before the central piston (10) ascends and closed just before the central piston descends,
an intake and exhaust valve disc cam (60) for opening and closing the intake and exhaust piston valve (63), and
a cylindrical finger (50) for alternately rotating the intake and exhaust valve disc cam left and right, wherein
a continuous massage is performed while repeating that the second cam (66) assembled on the output shaft (41) is rotated to simultaneously raise the central piston (10), the air is sucked into the central cylinder (20) through the opened intake and exhaust valve disc cam (60) while the central piston is raised, the intake and exhaust valve is closed by rotation of the cylindrical finger (50), and the air in the central cylinder (20) is supplied into the air bag by the central piston (10) lowered by rotation of the first cam (47), and a pressure reduction valve (25) automatically opened upon excessively high air pressure inside the central cylinder is assembled therein.

2. The high-performance valve of claim 1, wherein
the massage bed includes:
a massage bed frame (100);
a bed base (110) provided in the massage bed frame (100) to allow a subject (120) to lie thereon;
walls (131) erected at both sides of an upper body of the subject when the subject (120) lies;
a hinge (133) for fixing one of the walls (131) to the bed frame (100);
a lock (130) for fixing an opposite one of the walls;
a massage upper table (128) inserted between the walls (131) and having a lower surface to which a Velcro tape (137) is attached;
bolts (139) for fixing the massage upper table (128) to the walls (131);
a rectangular groove (122) and a plurality of round grooves (140) provided in the bed base (110);
thoracolumbar airbags (125 and 126) inserted into the rectangular groove (122);
acupressure pads (121) attached on tops of the airbags (125 and 126);
the airbag (125) inserted into the round groove (140); and
an acupressure rod (141) attached on a top of the airbag (125).

3. The high-performance valve of claim 1, wherein a composite product is formed by assembling the cylinder-type air massager, which includes a thoracolumbar massage roll (161) for focusing on massaging a thoracolumbar area, a sole massage roll (162), a massage ball warming function unit (163), a calf warming function unit (164), and a vibrator function unit for tapping the thoracolumbar area and uses the high-performance valve controlled by the non-standard gears, to a massage chair having a backrest erected to allow the subject to sit and horizontally lowered to allow the subject to lie down.

4. A high-performance valve controlled by non-standard gears, the high-performance valve comprising:
a first gear (59) having one tooth and assembled on an output shaft (41) of a reduction motor;
a second gear (52) rotated while being engaged with the first gear (59);
a third gear (54) having one tooth and assembled on a same shaft (55) of the second gear (52);
a fourth gear (58) rotated while being engaged with the third gear (54);
a disc cam (71) assembled on a same shaft (57) as the fourth gear (58) to repeat rotation and stop; and
a vent hole (72) of a piston valve raised to a groove a section of the disc cam when the disc cam is stopped, wherein
the non-standard gears are configured, in a massager for pressurizing and massaging a body part by using expansion force of an air bag (79) generated when air introduced from an outside when the vent hole is raised above a cylinder hole (74) of a high-performance valve cylinder block (70) and opened is supplied into the air bag through the vent hole (72) and a vertical passage (79), such that the first gear (21) having the one tooth and the second gear (22) having a plurality of teeth are manufactured to have lengths shorter than lengths of teeth of standard gears, so that the teeth of the two gears have engaged lengths shorter than engaged lengths of the standard gears so as to always stop the groove a section of the disc cam (71) vertically above the piston valve, thereby having the tooth length shorter than a tooth length of a standard gear so that the second gear (52) is rotated by a central angle corresponding to one tooth of the second gear when the first gear (59) having one tooth is rotated 360° one time.

5. A high-performance valve controlled by non-standard gears, the high-performance valve comprising:
a first gear (59) having one tooth and assembled on an output shaft (41) of a reduction motor;
a second gear (52) rotated while being engaged with the first gear (59);
a third gear (54) having one tooth and assembled on a same shaft (55) of the second gear (52);
a fourth gear (58) rotated while being engaged with the third gear (54); and
a disc cam (71) assembled on a same shaft (57) as the fourth gear (58) to repeat rotation and stop, wherein
an inter-axis distance obtained from an inter-axis distance formula, p. c. d of gear A + p. c. d of gear B ÷ 2, of standard gears, is designed to have a longer inter-axis distance to allow a groove a section of the disc cam to be stopped vertically above a piston valve (73) when the disc cam is stopped, to define an engaged length between teeth of the two gears to be shorter than the standard design formula, so as to allow the second gear having a plurality of teeth to be rotated by a central angle corresponding to one tooth of the second gear when the first gear (59) having the one tooth is rotated 360° one time.
